# EUROPÄISCHE PATENTANMELDUNG

(11) **EP 1 215 234 A1**
(43) Veröffentlichungstag der Anmeldung: **19.06.2002**
(21) Anmeldenummer: 01129148.1
(22) Anmeldetag: 08.12.2001
(51) Int. Cl.: C08K 11/00, C08J 3/20

(54) **Verfahren zur Herstellung härtbarer Formmassen für den Einsatz in Kommutatoren und Schleifringkörpern**

(30) Priorität: 12.12.2000 DE 10061807
(71) Anmelder: SÜD-WEST-CHEMIE GMBH, 89231 Neu-Ulm (DE)
(72) Erfinder: Poch-Parramon, Jose, 58642 Iserlohn (DE); Jindra, Horst, 89278 Nersingen (DE); Schapmann, Johannes, 88400 Biberach (DE)
(74) Vertreter: Eisenführ, Speiser & Partner

(57) **Zusammenfassung**

Beschrieben wird ein Verfahren zur Herstellung einer härtbaren Formmasse für die Herstellung von Kommutatoren und Schleifringkörpern. Das Verfahren umfasst folgende Schritte:
- Bereitstellen eines härtbaren, pulverförmigen oder körnigen Harzes mit einer maximalen Korngröße von 1 mm,
- Mischen des härtbaren Harzes mit Füll- und Verstärkungsstoffen sowie gegebenenfalls einem oder mehreren üblichen Zusätzen,
- Verdichten der so erhaltenen Mischung unter Bedingungen, bei denen das härtbare Harz als Feststoff vorliegt, so daß keine Benetzung der Füll- und Verstärkungsstoffe mit dem härtbaren Harz stattfindet.

Mit dem beschriebenen Verfahren sind Formmassen für Kommutatoren und Schleifringkörper besonders umweltschonend und energiesparend herstellbar.

Beschrieben werden auch rieselfähige härtbare Formmassen und Verfahren zur Herstellung von Kommutatoren.

## Beschreibung

Die vorliegende Erfindung betrifft ein Verfahren zur Herstellung einer härtbaren Formmasse für die Herstellung von Kommutatoren und Schleifringkörpern.

Kommutatoren haben die Aufgabe, in Elektromotoren die Richtung des elektrischen Stromes zu ändern. Der Kommutator selbst besteht aus voneinander getrennten Kupfersegmenten, den so genannten Lamellen, die direkt von einem Kunststoff oder indirekt über eine Ringarmierung zusammengehalten werden. Der Kunststoff selbst hat weiterhin die Aufgabe einer elektrischen Isolation der einzelnen Lamellen und der Lamellen gegenüber der Ankerwelle.

In der Praxis werden zur Kommutator-Herstellung hauptsächlich härtbare (duroplastische) Formmassen mit unterschiedlichsten Bindemitteln eingesetzt wie: Novolak, Resol, Melamin/Novolak, ungesättigte Polyesterharze, Epoxidharze und deren Mischungen. Die Verstärkung der Formmassen geschieht hauptsächlich über Glasfaser- und/oder Glimmerzusätze.

Die duroplastischen, verstärkten Formmassen werden von Kommutatorenherstellern bei Werkzeugtemperaturen zwischen 150°C und 200°C zu fertigen Kommutator-Kunststoffen ausgehärtet. Für die Verabeitung werden die üblichen Verfahren für duroplastische Formmassen herangezogen, wie z.B. (a) Pressen, (b) Transferpressen mit und ohne Vorplastifizierung bzw. HF-Vorwärmung (HF = Hochfrequenz) und (c) Spritzgießen.

Bedingt durch die hohen Anforderungen an die Steifigkeit dieser Kunststoffe bei Drehzahlen bis über 60000 Umdrehungen/min und Betriebstemperaturen bis zu 150°C wird in Fachkreisen allgemein angenommen, dass sowohl eine optimale Einbindung der Verstärkungsstoffe in die Harzmatrix als auch chemische Vorreaktionen bei der Duroplastherstellung notwendig sind.

Die Einbindung wird in der Praxis in der Regel bislang dadurch erreicht, dass bei der Formmassenherstellung (Aufbereitung) die Verstärkungsstoffe von einer Schmelze oder einer Harzlösung benetzt (imprägniert) werden und erste (Bindungs-)Reaktionen im Produktionsaggregat erfolgen (Schmelzflussverfahren bzw. Flüssigharzverfahren). Sowohl das Schmelz- als auch das Flüssigharzverfahren sind mit beträchtlichen Energiekosten verbunden, was aber bislang akzeptiert werden mußte.

In der Patentschrift DE 43 19 907 C2 wird zudem ein ansonsten recht selten benutztes Verfahren beschrieben, bei dem mit einem Turbomischer ohne den Umweg über eine Schmelze oder Lösung eine Glasfaserimprägnierung (Benetzung) erreicht wird (Turbomischverfahren). Die im Mischer entstehenden Temperaturen von 100°C führen zu einem Anschmelzen der Harze mit üblichen Schmelztemperaturen von 80°C bis 110°C und zu einer Benetzung (Imprägnierung) der als Verstärkungsstoff eingesetzten Glasfasern zweier unterschiedlicher Längen. Eine Zerkleinerung der Glasfasern durch den Einsatz eines Turbomischers ist allerdings unumgänglich und muß in Kauf genommen werden. Außerdem ist das Verfahren nur für Formmassen mit einem maximalen Harzanteil von 30 Gew.-% geeignet, weshalb zahlreiche Anwendungen ausgeschlossen sind und eine hohe Abrasion der Formmassen zu erwarten ist.

Die Hauptanforderungen an Kommutatoren und die zu ihrer Herstellung eingesetzten Formmassen lassen sich wie folgt zusammenfassen:
- Gute elektrische Isolation der Kommutator-Lamellen untereinander und gegenüber der Ankerwelle bei Betriebstemperatur,
- gute Dimensionsstabilität des Kommutators bei Betriebstemperatur auch bei hohen Drehzahlen,
- thermische Beständigkeit der Kommutatoren,
- gute Anbindung der Verstärkungsstoffe an die Duroplast-Matrix im fertigen Kommutator,
- geringe Lamellenbewegungen bei Betriebs- und Testbedingungen,
- Qualitätskonstanz der Formmassen.

Angesichts der bestehenden Nachteile bei den üblichen Verfahren war es die Aufgabe der vorliegenden Erfindung, ein Verfahren zur Herstellung einer härtbaren Formmasse für die Herstellung von Kommutatoren und Schleifringkörpern anzugeben, bei dem die vorstehend beschriebenen Nachteile nicht entstehen oder zumindest abgeschwächt sind. Insbesondere sollte das Verfahren (a) mit geringem Energieaufwand durchführbar sein und/oder (b) es ermöglichen, Glasfasern als Verstärkungsstoffe einzusetzen, ohne daß es bei der Formmassen-Herstellung zu einer inakzeptablen Faserverkürzung kommt. Die mechanischen und thermomechanischen Eigenschaften der auf erfindungsgemäße Weise hergestellten fertigen Formmasse sollten dabei zumindest annähernd erreicht, vorzugsweise aber sogar übertroffen werden.

Erfindungsgemäß wird diese Aufgabenstellung durch ein Verfahren mit folgenden Schritten gelöst:
- Bereitstellen eines härtbaren (duroplastischen), pulverförmigen oder körnigen Harzes mit einer maximalen Korngröße von 1 mm,
- Mischen des härtbaren Harzes mit Füll- und Verstärkungsstoffen sowie gegebenenfalls einem oder mehreren üblichen Zusätzen (z.B. Vernetzer, Initiatoren, Härter, Härtungsbeschleuniger, Härtungsinhibitoren, Gleitmittel, Trennmittel, Mischungen der vorgenannten Substanzen o.dgl.),
- Verdichten der so erhaltenen Mischung unter Bedingungen, bei denen das härtbare Harz als Feststoff vorliegt, so daß keine Benetzung der Füll- und Verstärkungsstoffe mit dem härtbaren Harz stattfindet.

Im Unterschied zu den bekannten Verfahren (Schmelzfluß-, Flüssigharz- und Turbomischverfahren) werden die eingesetzten Füll- und Verstärkungsstoffe im erfindurigsgemäßen Verfahren nicht benetzt, da das härtbare Harz bei der Formmassen-Herstellung nicht im flüssigen Aggregatszustand (als Schmelze oder Lösung) vorliegt.

Stattdessen wird ein im festen Aggregatszustand vorliegendes härtbares Harz nach Mischung mit weiteren Formmassen-Bestandteilen kalt kompaktiert, d.h. bei Temperaturen unterhalb seines Schmelzbereiches.

Mit dem erfindungsgemäßen Verfahren sind Formmassen für Kommutatoren und Schleifringkörper besonders umweltschonend und energiesparend herstellbar, und es ergeben sich dennoch Formmassen die sich zu Kommutatoren und Schleifringkörpern mit hervorragenden mechanischen und thermomechanischen Eigenschaften weiterverarbeiten lassen. Die Vorteile des erfindungsgemäßen Verfahrens sind erheblich, da weder ein Aufschmelzen der Harze (wie beim Schmelzflußverfahren) noch ein Verdampfen der Lösungsmittel (wie beim Flüssigharzverfahren) oder das Abkühlen der fertigen Formmasse (wie beim Schmelzfluß- oder Turbomischverfahren) notwendig sind. Neben einem geringeren Energieverbrauch wird auch erreicht, dass die üblicherweise als Verstärkungsstoff eingesetzten Glasfasern geschont und im fertigen Produkt weitgehend in der Ausgangslänge vorliegen, was zu entsprechend besseren Eigenschaften der aus den Formmassen hergestellten Kommutatoren führt. Zudem treten bei dem erfindungsgemäßen Verfahren keine Emmissionen von niedermolekularen Harzbestandteilen oder Lösungsmitteln auf, d.h. keine Umweltbelastungen.

Bevorzugt ist ein erfindungsgemäßes Verfahren, bei dem simultan mit der oder im Anschluß an die Verdichtung der Mischung eine Formgebung der verdichteten Mischung zu einer rieselfähigen Formmasse erfolgt. Eine solche rieselfähige Formmasse ist besonders gut zur Herstellung von Kommutatoren oder Schleifringkörpern geeignet, da sie gut portionierbar ist und bequem in das Formwerkzeug oder die Spritzgussmaschine zur Kommutatorherstellung eingebracht werden kann.

Formmassen zur Herstellung von Kommutatoren werden in der Praxis derzeit bei Anwendung des Schmelzflußverfahrens in einem Kneter wie z.B. einem Zweischneckenkneter, Walzen oder Buss-Kneter aufgeschmolzen und zu einer verarbeitbaren Formmasse aufgearbeitet. Im alternativen Flüssigharzverfahren werden flüssige Harze oder Harzlösungen in einem Mischer vorgelegt und in der Wärme aufgearbeitet. Das erhaltene Produkt muss anschließend gekühlt, gemahlen und abgesiebt werden. Das Ziel beider bislang üblicher Verfahren ist neben einer Vorreaktion der Harze und einer Homogenisierung der Mischung eine optimale Benetzung der eingesetzten Verstärkungsstoffe (insbesondere eingesetzter Glasfasern). Die sich auf die Endeigenschaften negativ auswirkende Zerkleinerung von regelmäßig als Verstärkungsstoff eingesetzten Glasfasern einer Ausgangslänge von 3mm bis 6mm auf Längen zwischen 0,2mm bis 0,8mm wird in der Praxis in Kauf genommen, da bei diesen Produkten die erwähnte Benetzung bislang für notwendig erachtet wurde.

Die vorliegende Erfindung beruht auf der Erkenntnis, daß eine Vorbehandlung der Mischung aus Harz und Füll-/Verstärkungsstoffen über den Umweg einer Schmelze oder Lösung nicht notwendig ist, wenn das eingesetzte Harz als Pulver mit einer maximalen Korngröße von 1mm, vorzugsweise maximal 0,5mm und besonders bevorzugt maximal 0,2mm vorliegt. Das eingesetzte Pulver muß lediglich mit einem ausreichenden Druck kalt verdichtet werden, und die Benetzung der üblicherweise eingesetzten Glasfasern erfolgt dann erst auf einer späteren Verarbeitungsstufe, nämlich im Formwerkzeug oder der Spritzgussmaschine.

Abhängig von der Art der Verdichtungswerkzeuge und -verfahren wird die verdichtete Formmasse beispielsweise gebrochen, um sie in den bevorzugten rieselfähigen Zustand zu überführen, oder es werden bei der Kaltverdichtung direkt rieselfähige Pellets hergestellt (z.B. in einer Tablettiermaschine).

Die kalte Verdichtung der Mischung (des Vorgemenges) aus den einzelnen Formmassen-Bestandteilen kann mit den bekannten Aggregaten wie z.B. Matrizenpressen, Kompaktierwalzen und Pelletpressen erfolgen. Es hat sich herausgestellt, dass es zum Erreichen der gewünschten Eigenschaften (Rieselfähigkeit, Stabilität der Formmassen-Partikel etc.) vorteilhaft ist, Drücke von mindestens 45 kN/cm² bei Verwendung von Kompaktierwalzen und mindestens 15 kN/cm² bei einer Pelletierung mit Pressen auszuüben, wenn die kalte Verdichtung mit Pulver einer Temperatur im Bereich von etwa 20-25°C durchgeführt wird. Bei höheren Temperaturen (unterhalb des Harzschmelzpunktes) sind allerdings bereits deutlich geringere Drücke ausreichend, beispielsweise genügt für Pulver einer Temperatur im Bereich von etwa 40-70°C bei einer Pelletierung mit Pressen regelmäßig eine Kraft von 8 kN/cm² oder weniger.

Die Anteile von Harz, Füll-/Verstärkungsstoff und weiteren Bestandteilen der nach dem erfindungsgemäßen Verfahren hergestellten Formmasse können in weiten Grenzen variieren.

Bevorzugt ist es aber, wenn (a) härtbares Harz und (b) Verstärkungsstoffe (Glimmer, Glasfasern o.dgl.) in der Mischung in einem Gewichtsverhältnis (Massenverhältnis) zwischen 2:7 und 4:3 vorliegen.

Der Anteil des härtbaren Harzes an der Mischung liegt dabei vorteilhafterweise zwischen 20 und 50 Gew.-% und vorzugsweise im Bereich zwischen 20 und 40 Gew.-%, bezogen auf die Masse der Gesamtmischung.

Der Anteil an Verstärkungsstoffen an der Mischung liegt bevorzugt zwischen 30 und 70 Gew.-%, bezogen auf die Masse der Gesamtmischung.

Die Verstärkungsstoffe sollten dabei einen Anteil von mindestens 20 Gew.-%, bezogen auf die Gesamtmasse der Mischung, an Glasfasern mit einer Länge zwischen 0,5 mm und 6 mm, vorzugsweise einer Länge zwischen 2 mm und 5 mm und noch weiter bevorzugt einer Länge zwischen 3 mm und 4,75 mm, umfassen.

Die Dicken der Glasfasern, insbesondere der Glasfasern in den genannten Längenbereichen, liegen dabei vorteilhafterweise zwischen 8µm und 15µm.

Besonders bevorzugte nach dem erfindungsgemäßen Verfahren hergestellte Formmassen sind wie folgt zusammengesetzt (die Prozentangaben sind dabei Gewichtsprozente und beziehen sich auf das Gesamtgewicht der Formmasse):

| | |
|---|---|
| Härtbare(s) Harz(e) (ggf. inklusive Vernetzer) | 20% - 50% |
| Füll- und Verstärkungsstoffe (z.B. Glasfasern) | 45,3% - 79,3% |
| ggf. Härter, Härtungsbeschleuniger, Inhibitoren | 0% - 10% |
| Gleit- und Trennmittel | 0,5% - 5% |
| ggf. Farbstoffe, Brandschutzmittel und sonstige Zusätze | 0% - 5% |

Ein weiterer Aspekt der vorliegenden Erfindung betrifft eine rieselfähige härtbare Formmasse zur Herstellung von Kommutatoren oder Schleifringkörpern, umfassend ein härtbares Harz und Füll- und Verstärkungsstoffe sowie gegebenenfalls einen oder mehrere übliche Zusätze, wobei das härtbare Harz und die Füll- und Verstärkungsstoffe sowie gegebenfalls die Zusätze miteinander gemischt sind. In Übereinstimmung mit dem erfindungsgemäßen Verfahren und im Unterschied zu den bislang bekannten rieselfähigen härtbaren Formmassen ist die Formmasse dabei kalt verdichtet, so daß das härtbare Harz die Füll- und Verstärkungsstoffe nicht benetzt.

Eine solche rieselfähige härtbare Formmasse kann nach dem erfindungsgemäßen Verfahren (in seinen verschiedenen Ausgestaltungen) hergestellt werden. Die bevorzugten Verfahrensgestaltungen und Mischungsrezepturen führen zu entsprechend bevorzugten Formmassen; auf die obigen Ausführungen wird verwiesen.

Im erfindungsgemäßen Verfahren und bei der Herstellung der erfindungsgemäßen Formmassen können die bislang bei der Herstellung von Kommutatoren und Schleifringkörpern eingesetzten härtbaren Harze eingesetzt werden. Einige Harze sind jedoch bevorzugt.

So lassen sich insbesondere durch den Einsatz ungesättigter Polyesterharze und/oder Melaminharze als härtbare Harze die elektrischen Eigenschaften von Kommutatoren und Schleifringkörpern verbessern, bei gleichzeitigem Beibehalten der notwendigen mechanischen und thermomechanischen Eigenschaften.

Nach dem erfindungsgemäßen Verfahren sind insbesondere härtbare (duroplastische) Formmassen auf Basis der folgenden Harze herstellbar: Ungesättigte Polyesterharze, Epoxidharze, phenolische Kondensationsharze (Novolake, Resole) und Mischungen der bisher genannten Harze sowie Mischungen von einem oder mehreren der genannten Harze mit Aminoplasten. Die Aushärtung der Harze erfolgt auf die übliche Weise mit den jedem Fachmann bekannten Härtern und Katalysatoren.

Die einsetzbaren phenolischen Kondensationsharze sind sauer oder alkalisch katalysierteKondensationsprodukte von phenolischen Verbindungen, insbesondere von Phenol oder Alkylphenolen mit Aldehyden, insbesondere Formaldehyd, wobei bei oder nach der Herstellung weitere Komponenten einkondensiert werden können. Bei sauer katalysierten Kondensationsprodukten, den sogenannten Novolaken ist die Zugabe eines Härters in der Regel notwendig. Bei selbsthärtenden Resolen, als alkalisch katalysierte Kondensationsprodukte des Phenols oder von Phenolderivaten, kann zusätzlich ein Härter wie z.B. Hexamethylentetramin zugefügt werden.

Bei den erwähnten Aminoplasten handelt es sich regelmäßig um feste Harze, wie z.B. die in Duroplasten eingesetzten Kauraminharze der Firma BASF.

Bei den erwähnten Polyesterharzen wird es sich regelmäßig um amorphe oder kristalline ungesättigte Polyesterharze oder Polyesterharzgemische handeln. Bevorzugte Polyesterharze werden durch Veresterung ungesättigter Dicarbonsäuren und Phthal-, Isophthal- und Terephthalsäure mit zweiwertigen Alkoholen oder Alkoholgemischen hergestellt. Der Einsatz so genannter Vernetzer wie Diallylphthalat oder Styrol ist in Mengen zwischen 0,5 und 20 Gew.-%, bezogen auf das duroplastische Harz, möglich. Als Härter bzw. Initiatoren können radikalbildende Substanzen wie z.B. Peroxide zugegeben werden.

Aminoplaste oder alkalische kondensierte Resole fallen regelmäßig in die Gruppe dersogenannten selbsthärtenden Produkte, die zur Aushärtung lediglich thermische Energie benötigen. Härter und/oder Härtungsbeschleuniger, soweit sie benötigt werden, sind bekannte und gebräuchliche Produkte, beispielsweise saure oder säureabspaltende Verbindungen als Beschleuniger für Aminoplaste.

Novolake werden bevorzugt mit Hexamethylentetramin gehärtet. Zur Härtung der Novolake können aber auch andere Harze wie z.B. Resole, Epoxidharze und/oder Melaminharze eingesetzt werden.

Weitere Bestandteile sind Härter und/oder Härtungsbeschleuniger, Inhibitoren, Füllstoffe, Farbstoffe, organische und anorganische Verstärkungsstoffe und -fasern, Glaskugeln, Brandschutzmittel sowie Gleit- und Trennmittel.

Bevorzugte Ausgestaltungen der Erfindung werden nachfolgend anhand der Beispiele erläutert:

### Beispiele

### Vorbemerkungen:

Probekörper zur Messung der mechanischen Eigenschaften nach ISO178, ISO179 bzw. IEC112/VDE303 bei der Kriechstromfestigkeit und zur Messung der Aufdornfestigkeit am Probekörper wurden durch Verpressen und Aushärten der Formmassen gemäß den nachfolgenden Beispielen hergestellt, und zwar ohne Vorwärmung oder Vorplastifizierung.

Die mechanischen Eigenschaften (Biegefestigkeit, Schlagzähigkeit, Kerbschlagzähigkeit) wurden an sogenannten grünen Probekörpern, d.h. ohne eine Temperung, untersucht.

Die Prüfungen der Aufdornfestigkeiten, Lamellenbewegungen und Glasübergangstemperaturen wurden nach spezifischen Temperungen durchgeführt, wie sie bei Kommutatoren üblich sind. Die Kommutatoren wurden nach einer HF-Vorwärmung des Materials auf ca. 80°C hergestellt. Auch in diesem Fall erfolgten die Prüfungen nach einer Temperung der Kommutatoren.

Bei der Aufdornfestigkeit wird in einen zylindrischen Körper mit einer Bohrung ein Dorn mit Übermaß eingedrückt und die Bruchkraft des Körpers als Aufdornfestigkeit angegeben.

Die Lamellenbewegung wurde nach einer Belastung der Kommutatoren von 40000 Umdrehungen/Minute bei 140°C für 3 Minuten ermittelt.

### Beispiel 1

Standard-Formmasse für Kommutatoren SK600 der Firma SWC, hergestellt nach dem Flüssigharzverfahren. Nach der Formmassenherstellung wurden Glasfaserlängen zwischen 0,5mm und maximal 3mm gemessen.

Aus dieser Formmasse wurden Kommutatoren oder Prüfkörper bei Werkzeugtemperaturen von 160°C +-5°C hergestellt und geprüft. Die Prüfungen an getemperten Formteilen oder Kommutatoren erfolgten nach der folgenden Temperung:

In 2 Stunden von Raumtemperatur auf 150°C; 5 Stunden bei dieser Temperatur halten; in weiteren 4 Stunden auf 190°C erwärmen und weitere 6 Stunden halten. Langsame Abkühlung auf Raumtemperatur.

### Beispiel 2

### Erfindungsgemäße Kommutatoren-Formmasse auf Novolak/Melamin-Basis

Zusammensetzung (Angaben in Gew.-%):

| | |
|---|---|
| 12% | Novolak mit einem Schmelzpunkt von 80°C-90°C |
| 16% | Kauramin 710 (Handelsname) der Firma BASF |
| 3,5% | Magnesiumstearat |
| 5% | Baumwolle |
| 50% | Glasfasern (Ausgangslänge 3mm; Durchmesser 11µm) |
| 13,5% | Kreide |
| | |
| 100% | Gesamt |

Die Harze (Novolak, Kauramin) besaßen eine maximale Korngröße von 0,2mm und wurden zunächst mit den übrigen Zuschlagstoffen aber ohne die Glasfasern 30 Minuten bei Raumtemperatur in einem Mischer gemischt. Am Ende dieses Prozesses wurden die Glasfasern zugegeben und das Gemenge (die Mischung) weitere 3 Minuten gemischt.

Das erhaltene Vorgemenge wurde auf einer Presse mit einem Druck von 15kN/cm² bei Raumtemperatur zu einem rieselfähigen Granulat verpresst, wobei das Harz nicht aufschmolz und dementsprechend auch keine Benetzung der eingesetzten Glasfasern erfolgte. Eine Erniedrigung der Glasfaserlängen während der Materialverdichtung erfolgte nur zu einem geringfügigen Anteil.

Aus der kalt verdichteten Granulat-Formmasse wurden zum Zwecke der Prüfung Kommutatoren oder Prüfkörper bei Werkzeugtemperaturen von 160°C +-5°C hergestellt; bei diesen Werkzeugtemperaturen schmolz der Harz-Bestandteil des Vorgemenges auf und benetzte die als Verstärkungsstoff zugesetzten Glasfasern.

Die Prüfungen an getemperten Formteilen oder Kommutatoren erfolgten nach der folgenden Temperung:

In einer Stunde von Raumtemperatur auf 150°C; 4 Stunden bei dieser Temperatur halten; in einer Stunde auf 165°C erwärmen; 5 Stunden bei dieser Temperatur halten; in weiteren 2 Stunden auf 190°C erwärmen und 5 Stunden bei dieser Temperatur halten. Langsame Abkühlung auf Raumtemperatur.

### Beispiel 3

### Erfindungsgemäße Kommutatoren-Formmasse auf Basis ungesättigter Polyester/Melaminharz

Zusammensetzung (Angaben in Gew.-%):

| | |
|---|---|
| 24% | Palatal 1835 N-O (Handelsname) der Firma BASF |
| 8% | Kauramin 710 (Handelsname) der Firma BASF |
| 1,5% | tert. Butylperbenzoat |
| 3,5% | Calciumstearat |
| 5% | Baumwolle |
| 2% | Magnesiumoxid |
| 50% | Glasfasern (Ausgangslänge 4mm; Durchmesser 14µm) |
| 6% | Kreide |
| | |
| 100% | Gesamt |

Die Harze (Palatal, Kauramin) besaßen eine maximale Korngröße von 0,2mm und wurden zunächst mit den übrigen Zuschlagstoffen aber ohne die Glasfasern 30 Minuten bei Raumtemperatur in einem Mischer gemischt. Am Ende dieses Prozesses wurden die Glasfasern zugegeben und das Gemenge (die Mischung) weitere 3 Minuten gemischt.

Das erhaltenen Vorgemenge wurde auf einer 100mm breiten Kompaktierwalze mit einem Druck von 500kN bei Raumtemperatur kompaktiert, wobei das Harz nicht aufschmolz und dementsprechend auch keine Benetzung der eingesetzten Glasfasern erfolgte. Anschließend wurde die erhaltene härtbare Formmasse zu einem rieselfähigen Granulat gebrochen; die maximale Erniedrigung der Glasfaserlängen betrug dabei 50%, d.h. max. 50% der eingesetzten Glasfasern wurden verkürzt.

Aus der kalt verdichteten Granulat-Formmasse wurden zum Zwecke der Prüfung Kommutatoren oder Prüfkörper bei Werkzeugtemperaturen von 160°C +-5°C hergestellt; bei diesen Werkzeugtemperaturen schmolz der Harz-Bestandteil des Vorgemenges auf und benetzte die als Verstärkungsstoff zugesetzten Glasfasern.

Die Prüfungen an getemperten Formteilen oder Kommutatoren erfolgten nach der folgenden Temperung:

In einer Stunde von Raumtemperatur auf 150°C; 2 Stunden bei dieser Temperatur halten; in einer Stunde auf 190°C erwärmen; 5 Stunden bei dieser Temperatur halten. Langsame Abkühlung auf Raumtemperatur.

In der Tabelle 1 sind die Untersuchungsergebnisse zu den Beispielen 1-3 zusammengefaßt. Man erkennt, daß die Prüfkörper und Kommutatoren gemäß den erfindungsgemäßen Beispielen 2 und 3 bei allen Untersuchungen (zumindest nahezu) gleich gute oder sogar bessere Ergebnisse aufwiesen als die Prüfkörper und Kommutatoren gemäß Vergleichs-Beispiel 1, in dem eine Standard-Formmasse eingesetzt wurde.

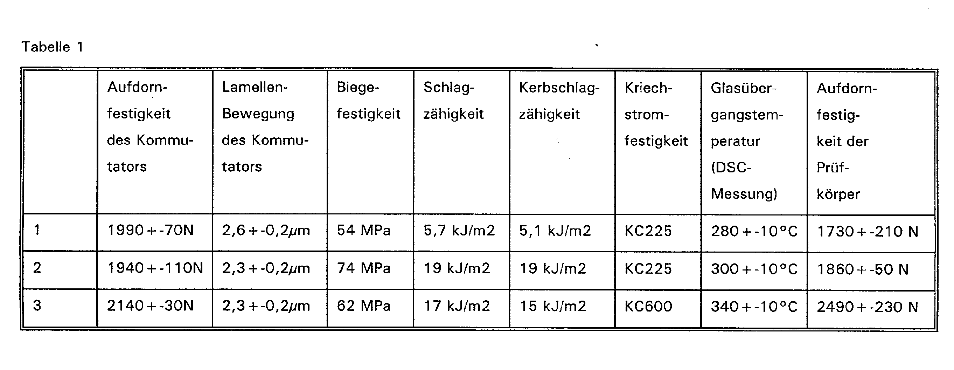

## Patentansprüche

1. Verfahren zur Herstellung einer härtbaren Formmasse für die Herstellung von Kommutatoren und Schleifringkörpern, mit folgenden Schritten:
- Bereitstellen eines härtbaren, pulverförmigen oder körnigen Harzes mit einer maximalen Korngröße von 1 mm,
- Mischen des härtbaren Harzes mit Füll- und Verstärkungsstoffen sowie gegebenenfalls einem oder mehreren üblichen Zusätzen,
- Verdichten der so erhaltenen Mischung unter Bedingungen, bei denen das Härtbare Harz als Feststoff vorliegt, so daß keine Benetzung der Füll- und Verstärkungsstoffe mit dem härtbaren Harz stattfindet.

2. Verfahren nach Anspruch 1,
**dadurch gekennzeichnet, daß** simultan mit der oder im Anschluß an die Verdichtung der Mischung eine Formgebung der verdichteten Mischung zu einer rieselfähigen Formmasse erfolgt.

3. Verfahren nach einem der vorangehenden Ansprüche,
**dadurch gekennzeichnet**, daßdie maximale Korngröße des härtbaren Harzes 0,5mm beträgt.

4. Verfahren nach einem der vorangehenden Ansprüche,
**dadurch gekennzeichnet**, daßdie maximale Korngröße des härtbaren Harzes 0,2mm beträgt.

5. Verfahren nach einem der vorangehenden Ansprüche,
**dadurch gekennzeichnet, daß** (a) härtbares Harz und (b) Verstärkungsstoffe in der Mischung in einem Gewichtsverhältnis zwischen 2:7 und 4:3 vorliegen.

6. Verfahren nach einem der vorangehenden Ansprüche,
**dadurch gekennzeichnet, daß** der Anteil des härtbaren Harzes an der Mischung zwischen 20 und 50 Gew.-% liegt.

7. Verfahren nach einem der vorangehenden Ansprüche,
**dadurch gekennzeichnet, daß** der Anteil des härtbaren Harzes an der Mischung zwischen 20 und 40 Gew.-% liegt.

8. Verfahren nach einem der vorangehenden Ansprüche,
**dadurch gekennzeichnet, daß** der Anteil an Verstärkungsstoffen an der Mischung zwischen 30 und 70 Gew.-% liegt.

9. Verfahren nach einem der vorangehenden Ansprüche,
**dadurch gekennzeichnet, daß** die Verstärkungsstoffe einen Anteil von mindestens 20 Gew.-%, bezogen auf die Gesamtmasse der Mischung, an Glasfasern mit einer Länge zwischen 0,5 mm und 6 mm umfassen.

10. Verfahren nach einem der vorangehenden Ansprüche,
**dadurch gekennzeichnet, daß** die Verstärkungsstoffe einen Anteil von mindestens 20 Gew.-%, bezogen auf die Gesamtmasse der Mischung, an Glasfasern mit einer Länge zwischen 2 mm und 5 mm umfassen.

11. Verfahren nach einem der vorangehenden Ansprüche,
**dadurch gekennzeichnet, daß** die Verstärkungsstoffe einen Anteil von mindestens 20 Gew.-%, bezogen auf die Gesamtmasse der Mischung, an Glasfasern mit einer Länge zwischen 3 mm und 4,75 mm umfassen.

12. Verfahren nach einem der vorangehenden Ansprüche,
**dadurch gekennzeichnet, daß** als Zusätze Vernetzer, Initiatoren, Härter, Härtungsbeschleuniger, Härtungsinhibitoren, Gleitmittel, Trennmittel oder Mischungen dieser Substanzen eingesetzt werden.

13. Rieselfähige härtbare Formmasse zur Herstellung von Kommutatoren oder Schleifringkörpern, umfassend
- ein härtbares Harz und
- Füll- und Verstärkungsstoffe
sowie gegebenenfalls
- einen oder mehrere übliche Zusätze,
wobei das härtbare Harz und die Füll- und Verstärkungsstoffe sowie gegebenfalls die Zusätze miteinander gemischt sind,
**dadurch gekennzeichnet, daß**
- die Formmasse kalt verdichtet ist, so daß das härtbare Harz die Füll- und Verstärkungsstoffe nicht benetzt.

14. Rieselfähige härtbare Formmasse,
**dadurch gekennzeichnet, daß** sie nach einem Verfahren gemäß einem der Ansprüche 1 - 12 herstellbar ist.

15. Verfahren zur Herstellung eines Kommutators, wobei eine rieselfähige, ein härtbares Harz umfassende Formmasse nach einem der Ansprüche 13-14 in ein Formwerkzeug eingefüllt und darin einer Temperaturbehandlung unterzogen wird, bei der das in der Formmasse enthaltene duroplastische Material die Füll- und Verstärkungsstoffe benetzt und aushärtet.
